Europäisches Patentamt

European Patent Office

Office européen des brevets

(11) Veröffentlichungsnummer: **0 284 947**
A1

# EUROPÄISCHE PATENTANMELDUNG

(21) Anmeldenummer: 88104523.1

(22) Anmeldetag: 22.03.88

(51) Int. Cl.4: **B01J 27/198** , B01J 37/00 , C07C 51/25 , C07C 57/04

(30) Priorität: 31.03.87 DE 3710784

(43) Veröffentlichungstag der Anmeldung: 05.10.88 Patentblatt 88/40

(84) Benannte Vertragsstaaten: BE DE ES FR GB IT NL

(71) Anmelder: Röhm GmbH
Kirschenallee Postfach 4242
D-6100 Darmstadt 1(DE)

(72) Erfinder: Langerbeins, Klaus, Dr.
Bahnstrasse 31-33
D-6070 Langen(DE)
Erfinder: Gruber, Wilhelm, Dr.
Peter-Behrens-Strasse 34
D-6100 Darmstadt(DE)

(54) Heteropolysäure-Oxidations-Katalysatoren mit verbessertem Langzeit-Aktivitäts-Verhalten.

(57) Die Erfindung betrifft die Herstellung von Oxidationskatalysatoren aus Heteropolysäuren des Molybdäns bzw. aus ihren Metallsalzderivaten, durch Mitverwendung einer wasserlöslichen und wenig bzw. praktisch nicht flüchtigen, organischen Verbindung, wie z.B. eines Polymeren, bei der Präparation des Katalysators und dem anschließenden Calcinieren des Präparates bei 200 bis 400 Grad C in Gegenwart von Sauerstoff.
So hergestellte Oxidationskatalysatoren zeigen beispielsweise bei der Oxidehydrierung von Isobuttersäure zu Methacrylsäure, ein verbessertes Langzeit-Aktivitäts-Verhalten.

EP 0 284 947 A1

## Gebiet der Erfindung

Die Erfindung betrifft die Herstellung eines Oxidationskatalysators auf der Basis von Heteropolysäuren des Molybdäns. Solche Heteropolysäuren und ihre Metallsalze sind als selektiv wirkende Katalysatoren in Oxidehydrierungsreaktionen, z.B. bei der Oxidehydrierung von Isobuttersäure zu Methacrylsäure bekannt.

## Stand der Technik

12-Molybdophosphorsäure, $H_3PMo_{12}O_{40}$, und besonders deren Vanadiumderivate, d.h. Molybdovanado-phosphorsäuren der Formel $H_{3+x}PMo_{12-x}V_xO_{40}$, mit X = 1,2 oder 3, sind als Heteropolysäurekatalysatoren für die Durchführung selektiver Oxidationen, so auch für die Oxidehydrierung von Isobuttersäure oder ihren Estern zu Methacrylsäure oder ihren Estern bekannt.

Die Herstellung solcher Heteropolysäuren ist u.a. in Inorg. Chem. 7 (1968), S. 437-441 oder in US-A 4 146 574 beschrieben. Zur Verwendung als Katalysatoren in Gasphasenoxidationen werden die Heteropolysäuren, auch in Form von Salzen bzw. Metallderivaten, vorteilhaft zusammen mit inerten anorganischen Trägermaterialien, wie beispielsweise Siliciumdioxid oder Aluminiumoxid, die für spezielle Verwendungen bestimmte innere Oberflächen und Porositäten haben, in handhabbare Formen gebracht.

Katalysatoren dieser Art und ihre Verwendung, beispielsweise und insbesondere zur oxidativen Dehydrierung von Isobuttersäure zu Methacrylsäure, sind in der DE-A 27 22 375 und dem EP-B 0 113 084 beschrieben. Die Verwendung von beispielsweise $H_5PMo_{10}V_2O_{40}$-haltigen oder $Cu_{0,2}PMo_{10}VO_{35,2}$-haltigen, nach dem bisher bekannten Stand der Technik hergestellten Katalysatoren, zeigt einen großen Nachteil derselben, und zwar den, daß sie relativ schnell desaktivieren und dadurch technisch gesehen, eine zu kurze Lebensdauer haben. Desaktivierte Katalysatoren lassen sich beispielsweise nach den Verfahren der deutschen Patentanmeldung P 36 26 255.2 regenerieren.

## Aufgabe und Lösung

Es bestand die Aufgabe, bei Oxidationskatalysatoren auf der Basis von Heteropolysäuren des Molybdäns durch Maßnahmen bei ihrer Herstellung, eine Verbesserung ihrer Aktivitäts-Zeit-Verhalten zu erreichen. Es wurde gefunden, daß bei der Präparierung von Katalysatoren aus Heteropolysäuren bzw. aus ihren Metallsalzderivaten und gegebenenfalls inerten, anorganischen Trägern bzw. Verdünnungsmitteln, durch Zusatz einer wasserlöslichen und wenig bzw. praktisch nicht flüchtigen, organischen Verbindung, insbesondere eines Polymeren, mit nachfolgendem Trocknen und Calcinieren der gegebenenfalls durch Tablettieren, Extrudieren und Pelletisieren, geformten Katalysatoren, die Aktivitäten so neu hergestellter Katalysatoren nachhaltig, d.h. zeitabhängig wesentlich verbessert sind.

Die Erfindung betrifft ein Verfahren zur Herstellung von Oxidationskatalysatoren auf der Basis von Heteropolysäuren des Molybdäns mit Mo, P und V als wesentlichen Elementen bzw. deren Metallsalzderivaten, gegebenenfalls unter Zusatz von inerten anorganischen Trägermaterialien, das dadurch gekennzeichnet ist, daß die Präparierung der Katalysatoren aus dem katalytisch aktiven Heteropolysäurematerial A in Gegenwart von wasserlöslichen und wenig bzw. praktisch nichtflüchtigen organischen Verbindungen B durchgeführt wird, wobei die Gemische aus A und B nach Trocknung und gegebenenfalls nach Formgebung, bei Temperaturen von 200 bis 400 Grad C in Gegenwart von Sauerstoff calciniert werden. Als brauchbare wasserlösliche, organische Verbindungen haben sich Oligomere und Polymere erwiesen.

Für die Herstellung von Formkörpern aus katalytischem Material ist zwar bekannt, organische Materialien, z.B. zur Verbesserung der Fließeigenschaften des zu verformenden Materials, wie Paraffin oder Stearinsäure beim Tablettieren, oder Binderzusätze, wie Leime, Stärke, Gummi, Zucker, Alginate, zum Agglomerieren von Katalysatorpartikeln, z.B. bei der Granulierung auf dem Granulierteller, zugegeben. Die nach dem Stand der Technik zur Verformung der Katalysatorvorläufer eingesetzten Hilfsmittel, verändern dabei die katalytische Wirksamkeit des fertigen Katalysators, wie dies jedoch bei dem erfindungsgemäßen Verfahren der Fall ist, jedoch nicht mehr (Ullmanns Encyclopädie der technischen Chemie, 4. Auflage, Band 13, Seiten 563 bis 564).

Erfindungsgemäß hergestellte Oxidationskatalysatoren werden vorteilhaft für die Oxidehydrierung von Isobuttersäure und/oder deren niederen Estern zu Methacrylsäure und/oder deren niederen Estern in der Gasphase im Temperaturbereich von 250 bis 400 Grad C verwendet.

Vorteile der Erfindung

Überraschenderweise zeigt sich bei der Verwendung erfindungsgemäß hergestellter Katalysatoren, so z.B. bei der Oxidehydrierung von Isobuttersäure, eine Stabilisierung der Anfangsaktivitäten im Vergleich zu praktisch gleichen aber weniger aktivitätsstabilen Katalysatoren, hergestellt nach dem Stand der Technik. Dadurch wird eine Regenerierung desaktivierter Katalysatoren nicht oder seltener notwendig. Bei einer doch notwendig werdenden aufarbeitenden Regenerierung von desaktivierten Katalysatoren hat es sich ebenfalls als vorteilhaft erwiesen, diese in Gegenwart von wasserlöslichen, organischen Polymeren durchzuführen, wodurch wieder aktivitätsstabilere Katalysatoren erhalten werden.

Ausführung der Erfindung

a) Aktive Komponenten : A

Die erfindungsgemäß hergestellten Katalysatoren enthalten als aktives Material Phosphor-Molybdän-Heteropolysäuren, insbesondere deren Vanadiumderivate, die sich durch die chemische Formel $H_{3+x}PMo_{12-x}V_xO_{40}$, mit X = 0,1,2,3 beschreiben lassen. Als aktive Komponenten werden auch Metallsalze dieser Heteropolysäuren (EP-B 0 079 491) und/oder auch Gemische dieser Heteropolysäuren, gegebenenfalls in Form ihrer Metallsalze verwendet, wie diese in der deutschen Anmeldung P 36 26 256.0 beschrieben sind. Für die Oxidehydrierung von Isobuttersäure oder deren Estern haben sich als Metallsalze der Heteropolysäuren besonders Cu-haltige Heteropolysäuren, wie in der EP-B 0 113 083 beschrieben, bewährt.

b) Wasserlösliche, organische Verbindungen geringer Flüchtigkeit : B

Für die Erfindung, die darin besteht, daß bekannte aktive Komponenten A in Gegenwart von wasserlöslichen, organischen Verbindungen geringer Flüchtigkeit, VB, zum Gasphasenkatalysator formiert werden, können als B natürliche und/ oder synthetische Polymere eingesetzt werden. Zu den brauchbaren natürlichen Polymeren zählen beispielsweise Polysaccharide, wie Pektine, Stärke, Dextrine oder Eiweißstoffe und Eiweißhydrolysate, die zum teil erst in der Wärme wasserlöslich bzw. stark quellbar sind. Brauchbare synthetische Polymere sind insbesondere Vinylpolymerisate, von beispielsweise Acrylsäure, Methacrylsäure, Maleinsäure, Maleinsäureanhydrid, Acrylamid, Methacrylamid, von Copolymerisaten derselben oder von N-Vinylpyrrolidon und dessen Copolymerisate, aber auch Additionspolymere, wie z.B. solche des Ethylenoxids. Unter dem Begriff Polymere werden Polymerprodukte verstanden, die einmal aus nur wenigen Grundbausteinen bestehen - im Minimalfall aus zwei - den Oligomeren, und solche, die aus einer Vielzahl von Grundbausteinen bestehen und Molmassen von beispielsweise 10 000 oder deutlich darüber bis 100 000 oder 1 000 000 oder mehr haben.

Beispiele für organische, wasserlösliche Oligomere sind gewisse Dextrine, das sind Abbauprodukte von Stärke, mit Molmassen im Bereich von 1 000 bis 10 000. Erfindungsgemäß brauchbare synthetische, wasserlösliche Oligomere sind solche des Ethylenglykols oder des Propylenglykols, wie Triethylenglykol, Tetraethylenglykol, Pentaethylenglykol und höhere Oligomere bzw. deren Gemische und Polypropylenglykole mit einer Molmasse unter 900. Die Polyaklylenglykole können, wenn die Wasserlöslichkeit weiter gegeben ist, auch an den endständigen Hydroxylgruppen weiter umgesetzt. z.B verethert sein. Oligomere Acryl-bzw. Methacrylsäuren sind gut bekannt. Polyacrylsäuren bzw. Polymethacrylsäuren sind technisch wichtige Produkte und sind als solche mit einem großen Molmassenbereich, z.B. von 10 000 bis 1 000 000, als Zusätze bei der Katalysatorpräparierung brauchbar.

Bei dem erfindungsgemäßen Verfahren hat sich auch Polyvinylalkohol als wasserlösliches, organisches Polymer bewährt. Dieses Polymer wird durch Hydrolyse von Polyvinylestern, z.B. aus Polyvinylacetat hergestellt.

Zu den brauchbaren Verbindungen, die den Kriterien zur Durchführung der Erfindung genügen, zählen auch Pentaerythrit, ein tetrafunktioneller Alkohol, oder Carbonsäuren, wie Ölsäure, Zitronensäure und auch Oxalsäure.

Für das erfindungsgemäße Verfahren zur Herstellung von in ihrem Aktivitätsverhalten verbesserten Heteropolymolybdat-Katalysatoren sind danach organische Verbindungen brauchbar, die eine genügende Wasserlöslichkeit, d.h. eine solche von mindestens 0,2 g in 100 g Wasser bei 20 Grad C besitzen, die in dem Temperaturbereich von etwa 20 bis 350 Grad C wenig bzw. praktisch nicht flüchtig sind (maximaler Dampfdruck : ca. 400 mbar), und die bei den Calciniertemperaturen von 200 bis 400 grad C in gegenwart von Sauerstoff weitgehendst und rückstandsfrei, im wesentlichen oxidativ abgebaut werden.

c) Herstellung der Katalysatoren.

Die organischen, wasserlöslichen Verbindungen werden vorzugsweise in Form von 0,5 bis 60, insbesondere als 1 bis 50 und vor allem als 2 bis 40 Gew.-%ige wässrige Lösungen bei dem erfindungsgemäßen Verfahren eingesetzt. Sie kommen in Mengen von 0,5 bis 50, insbesondere in Mengen von 0,5 bis 30 und vor allem in Mengen von 1 bis 10 Gewichtsteile auf 100 Gewichtsteile aktiver Heteropolysäure-Verbindungen zur Anwendung.

Bei der Präparierung können wässrige Lösungen der Heteropolysäure-Verbindungen mit wässrigen Lösungen der organischen Verbindungen kombiniert werden, oder es können feste Heteropolysäure-Verbindungen zu den wässrigen Lösungen der organischen Verbindungen gegeben werden, wie es auch möglich ist, feste wasserlösliche Verbindungen der beschriebenen Art zu wässrigen Lösungen bzw. Aufschlämmungen der Heterpolysäure-Verbindungen zuzugeben und darin aufzulösen. Die wässrigen Zubereitungen werden dann, gegebenenfalls in Gegenwart von inerte, anorganischen Trägermaterialien, wie beisielsweise Siliciumdioxid, Siliciumcarbid oder Aluminiumoxid, die wie in EP-B 0 079 491 beschrieben, auch als vorgefertigte, geformte Träger vorliegen können, eingedampft, und das erhaltene Trockengut, gegebenenfalls nach dessen Formgebung, wenn dies vorgesehen ist, bei Temperaturen von etwa 100 bis 150 Grad C weiter getrocknet und dann im Temperaturbereich von 150 bis 400 Grad C, insbesondere im Teperaturbereich von 200 bis 400 Grad C, vor allem bei 250 bis 350 Grad C in Gegenwart von Sauerstoff calciniert. Die Formgebung kann auch nach der Calcinierung des katalytischen Materials nach bekannten Techniken durchgeführt werden.

Das Verfahren der Erfindung ist beduetsam für die Herstellung von Oxidationskatalylsatoren, die in Gasphasenoxidationsreaktionen verwendet werden, wie beispielsweise für die Oxidation von Olefinen, wie Propylen oder Isobutylen zu Acrolein oder Methacrolein, oder für deren Weiteroxidation zu Acrylsäure oder Methacrylsäure. Besondere Bedeutung haben Katalysatoren nach der vorliegenden Erfindung für die oxidative Dehydrierung von Isobuttersäure oder ihrer Ester zu Methacrylsäure oder ihrer Ester, die vorteilhaft an Katalysatoren auf der Basis von heteropolysäuren des Molybdäns, auch von Salzen dieser Heteropolysäuren durchgeführt wird. Die Oxidehydrierung beispielsweise von Isobuttersäure, wird an diesen Katalysatoren im Temperaturbereich von etwa 250 bis 400 Grad C in Gegenwart von 1 bis 4 Mol sauerstoff pro Mol Isobuttersäure durchgeführt, wobei weitere Inertgase wie u.a. Stickstoff oder Wasserdampt oder $CO_2$ zugegen sein können.

In den folgenden Beispielen wird die erfindungsgemäße Herstellung von Aktivitäts-stabileren P-Mo-V-haltigen Heteropolysäure-Katalysatoren bei der Oxidehydrierung von Isobuttersäure zu Methacrylsäure gezeigt.

BEISPIELE

A. Erfindungsgemäße Herstellung der Katalysatoren

Beispiel 1

$H_{3,6}Cu_{0,2}PMo_{11}VO_{40}$-Katalysator.

Ein Gemisch aus 198,31 g $MoO_3$, 11,39 g $V_2O_5$, 14,26 g $H_3PO_4$, 2,0 g CuO und 2034 g destilliertem Wasser werden unter Rühren 16 h bei Siedetemperatur gehalten. Dann wird die Lösung auf ca. 20 Grad C abgehühlt und diese nach Filtration mit 6,73 g einer Polyacrylsäure vom Molekulargewicht Mw 20 000 als 40 Gew.-%ige Lösung versetzt. Nach 45 min wird die Lösung mit 80,07 g Kieselgur und 16 g Aerosil ® 200 (Gewichtsverhältnis Kieselgur : Aerosil ® = 5 : 1) versetzt und dann das gemisch bis zur Paste eingeengt. Diese wird dann im Trockenschrank 1 h bei 110 Grad C und 3 h bei 200 Grad C getrocknet und getempert und dann das feste Produkt 3 h bei 300 Grad C in Gegenwart von Luftsauerstoff calciniert. Das so erhaltene Katalysatormaterial wird nach dem Abkühlen auf eine Korngröße von 2 - 5 mm zerkleinert.

Beispiele 2 bis 4

Analog Beispiel 1 werden durch Umsetzung von $MoO_3$, $V_2O_5$, $H_3PO_4$, CuO und gegebenenfalls $Cs_2CO_3$, in den aus den Formeln der Tabelle 1 ersichtlichen Molverhältnissen, Lösungen dieser angegebenen Heteropolysäure-Verbindungen hergestellt, eine wasserlösliche, nicht flüchtige organische Verbindung in einer Menge von 3 Gew.-Teilen auf 100 Gew.-Teile aktive Komponente hinzugegeben und dann entsprechen Beispiel 1 mit Kieselgur/Aerosil ® ein Gemisch von aktiver Komponente A und Kieselsäure-Verdünnung, im Gewichtsverhältnis 70 : 30 gebildet, das als Paste getrocknet und, wie in Beispiel 1 angegeben, calciniert wird.

## Tabelle 1

| Beispiel Nr. | Zusammensetzung der aktiven Komponente | zugesetzte organische Verbindung |
|---|---|---|
| 2 | $H_{3,6}Cu_{0,2}PMo_{11}VO_{40}$ | Polyvinylalkohol (Mw 72 000) |
| 3 | $H_{4,6}Cu_{0,2}PMo_{10}V_2O_{40}$ | Polyacrylsäure (Mw 15 000) |
| 4 | $H_{3,2}Cs_{0,1}Cu_{0,1}PMo_{11,5}V_{0,5}O_{40}$ | Polyacrylsäure (Mw 32 000) |

Beispeil 5

Eine nach der US-PS 4 146 574 hergestellte, kristallwasserhaltige Heteropolysäure $H_5PMo_{10}V_2O_{40}$ wird pulverförmig mit einer 5 Gew.-%igen Polyvinylpyrrolidon (Kollidon ® 25)-Lösung mit 55 Gew.-% Wasser und 40 Gew.-% Isopropanol, pelletiert (s. dazu Ullmanns Encyklopädie der technischen Chemie, 4. Auflage, band 2, seiten 321 bis 327). Dabei werden auf 100 g $H_5PMo_{10}V_2O_{40}$ 5 g Polyvinyl pyrrolidon eingebracht. Die Pellets mit einem mittleren Durchmesser von 3,5 mm werden 2 h bei 110 Grad C und dann 2 h bei 150 Grad C getrocknet und dann 4 h bei 310 Grad C in Gegenwart von Luftsauerstoff calciniert.

Beispiel 6

Nach EP-B 0 046 840, Beispiel 1, wird ein Kieselgur/Aerosil ®-freier $Cs_2Mo_{12}V_{1,5}P_2O_{45,8}$-Katalysator und ohne die dort mitangegebene Calcinierstufe hergestellt. Dem Katalysatorpulver (100 g) werden 5 g Polyvinylpyrrolidon (Kollidon ® 25) in Form einer 20 Gew.-%igen wässrigen Lösung zugegeben, das ganze gut vermischt, getrocknet und bei 320 Grad C in gegenwart von Luftsauerstoff 5 h calciniert.

B. Katalysatortests bei der Oxidehydrierung von Isobuttersäure

Allgemeine Versuchsdurchführung bei der Oxidehydrierung.

Ein dampfförmiges Gemisch aus Isobuttersäure (IBS) und Sauerstoff (als Luft) im Molverhältnis 1 : 1,5 und gegebenenfalls weiterem Stickstoff in Mengen von 2 Mol pro Mol Isobuttersäure wird unter den in der Tabelle 2 angegebenen Bedingungen in einem Kreislaufreaktor, nach DE-OS 30 19 731, an einem angegebenen Katalysator zur Reaktion gebracht. Das Reaktionsgas wird laufend gaschromatographisch analysiert und mit Hilfe der erhaltenen Werte Isobuttersäure-Umsatz (U-IBS) und Methacrylsäure-Selektivität (S-MAS) ermittelt.

Tabelle 2

| Versuch Nr. | Katalysator kat. aktive Komponente | Temperatur Grad C | IBS-Belastung g IBS pro 1 000 g akt. Komp. und h | Ergebnis Abbildung Nr. |
|---|---|---|---|---|
| 1 | $H_{3,6}Cu_{0,2}PMo_{11}VO_{40}$ | 340 | 1250 + zus. $N_2$ | 1 u. 2 |
| 2 (Vergl.) | dito nach Beispiel 1 ohne Polyacrylsäure | 340 | 1250 + zus. $N_2$ | 1 u. 2 |
| 3 | dito nach Beispiel 1 | 340 | 1250 + zus. $N_2$ | 3 |
| 4 | dito nach Beispiel 2 | 340 | 1250 + zus. $N_2$ | 3 |
| 5 | $H_{4,6}Cu_{0,2}PMo_{10}V_2O_{40}$ nach Beispiel 3 | 340 | 834 | 4 u. 5 |
| 6 (Vergl.) | dito nach Beispiel 3 ohne Polyacrylsäure | 340 | 834 | 4 u. 5 |
| 7 | $H_{3,2}Cu_{0,1}Cs_{0,1}PMo_{11,5}V_{11,5}O_{40}$ nach Beispiel 4 | 320 | 2500 | 6 u. 7 |
| 8 (Vergl.) | dito nach Beispiel 4 ohne Polyacrylsäure | 320 | 2500 | 6 u. 7 |

Versuche Nr. 9 und Nr. 10 (Vergleich)

Anlalog den Versuchsdurchführungen der Versuche 1 bis 8 wird der Katalysator aus Beispiel 5 bei einer Reaktionstemperatur von 340 Grad C und einer stündlichen IBS-Belastung von 600 g pro 1 000 g aktiver Komponente, in Gegenwart von 1,5 Mol $O_2$ (als Luft) und zusätzlich 2 Molen $N_2$ pro Mol IBS, geprüft und das Ergebnis dieses Versuchs mit einem gleichen Versuch, ausgeführt an einem Katalysator mit der gleichen katalytisch aktiven Komponente, jedoch ohne Zusatz von Polyvinylpyrrolidon hergestellt, verglichen. Beide Katalysatoren zeigen in den ersten 100 Reaktionsstunden IBS-Umsätze von 82 bis 85 % bei Methacrylsäure-Selektivitäten von 72 %. Der erfindungsgemäß hergestellte Katalysator hält über viele Hunderte von Stunden dieses Aktivitäts-und Selektivitätsverhalten bei, während der Katalysator nach dem Stand der Technik, nach ca. 100 Reaktionsstunden kontinuierlich in seiner Aktivität (U-JBS) deutlich abfällt und auch in seinem MAS-Selektivitätsverhalten nachläßt.

Versuche Nr. 11 und Nr. 12 (Vergleich)

Über je 2 ml $Cs_2Mo_{12}V_{1,5}P_2O_{45,8}$-Katalysator (Versuch Nr. 11, erfindungsgemäß nach Beispiel 6 hergestellt, Versuch Nr. 12, ohne Polyvinylpyrrolidon hergestellt) wird bei Temperaturen von 350 bis 330 Grad C ein Gemisch von IBS : $O_2$ (als Luft) : $H_2O$ + = 1 : 1,7 : 2 (mol) geleitet. Die dabei durchgegührten analytischen Untersuchungen bringen in den ersten 50 Versuchsstunden folgende Aktivitäts-und Selektivitätsergebnisse (Tabelle 3).

## Tabelle 3

| Versuch Nr. | Temperatur Grad C | IBS-Umsatz % | MAS-Selektivität % |
|---|---|---|---|
| 11 | 350 | 99,4 | 63,5 |
| | 340 | 98,0 | 62,8 |
| | 330 | 95,3 | 63,0 |
| 12 | 350 | 91,0 | 66,6 |
| | 340 | 90,1 | 66,1 |
| | 330 | 77,8 | 65,3 |

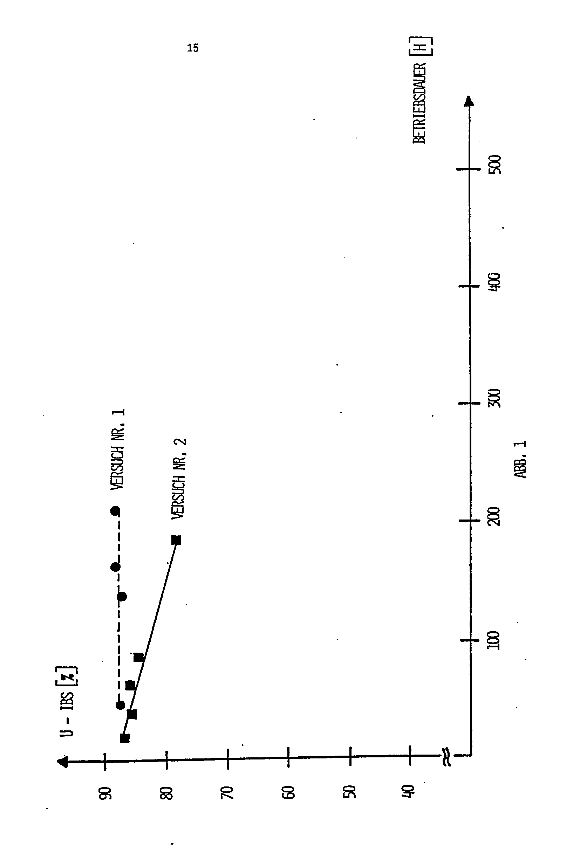

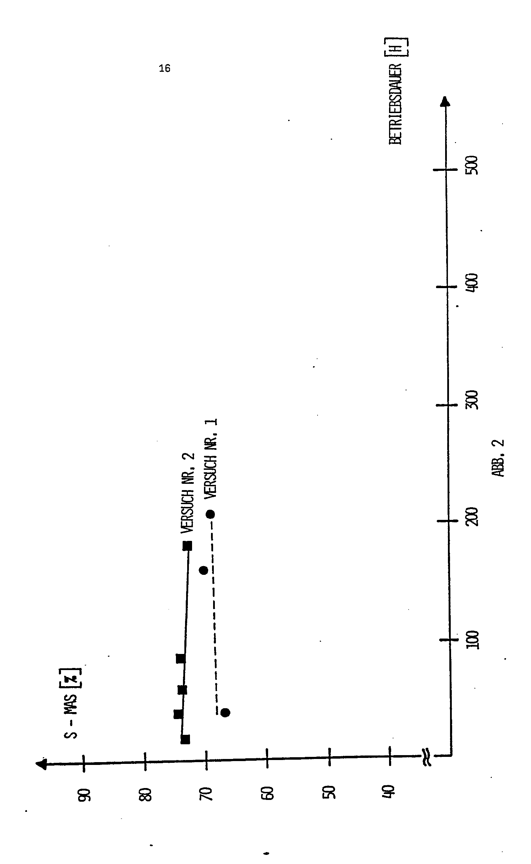

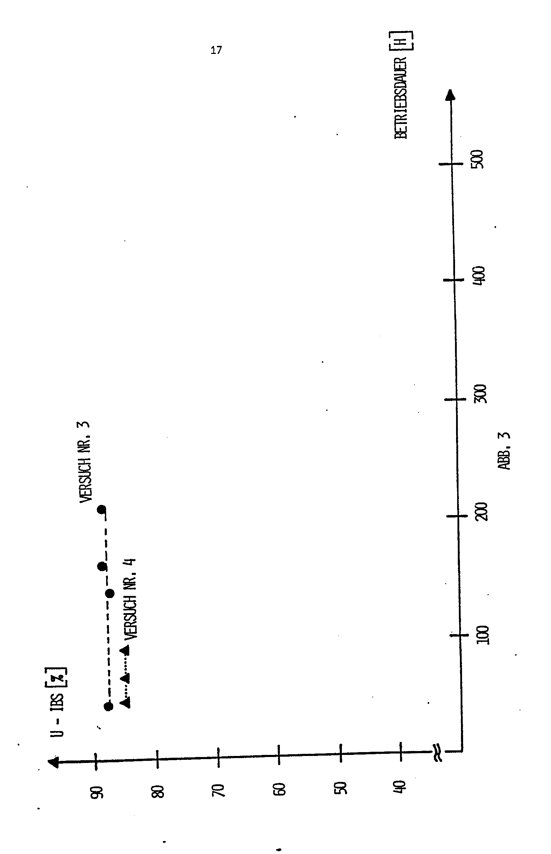

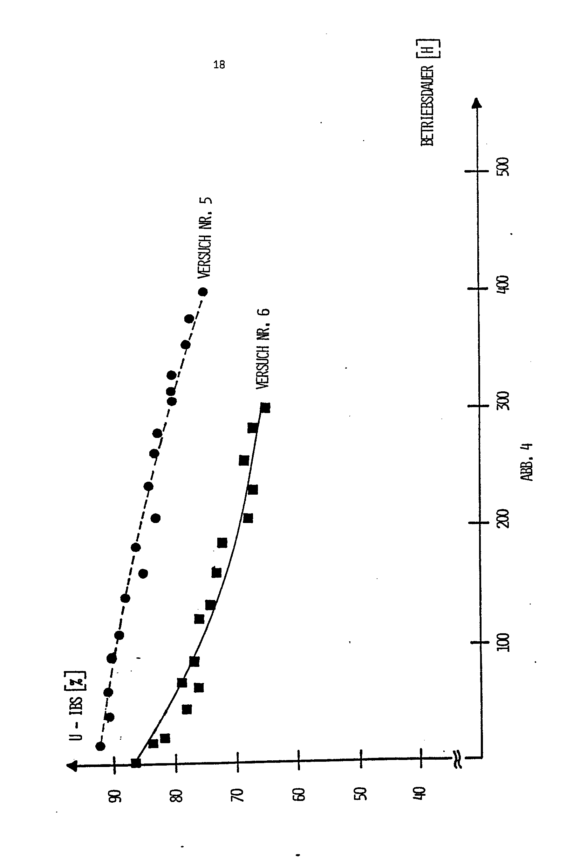

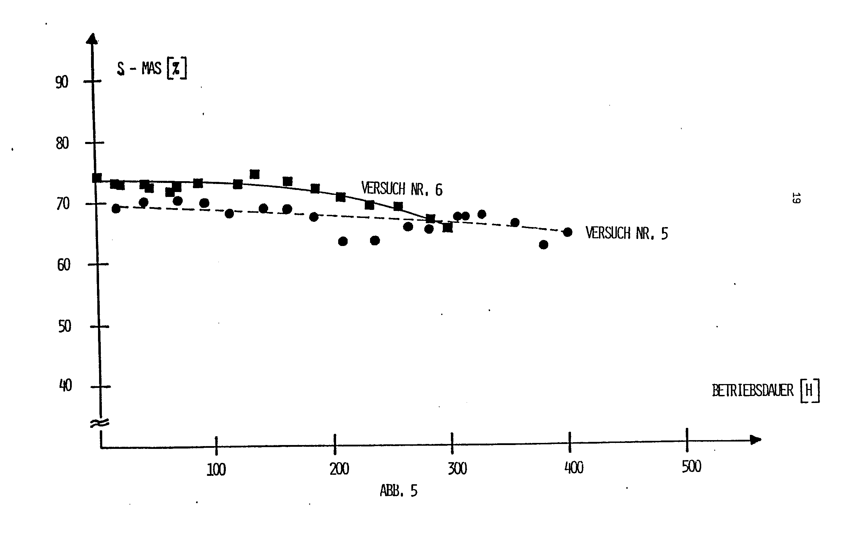

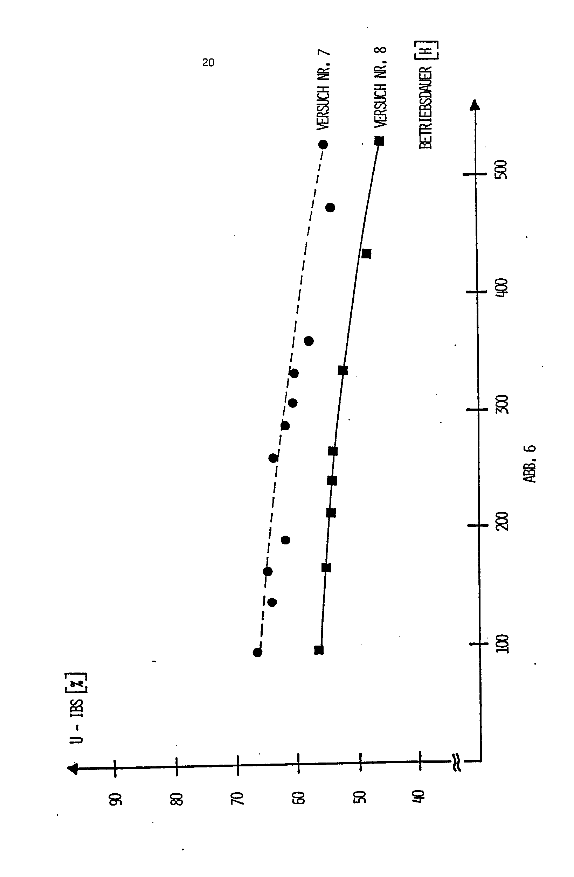

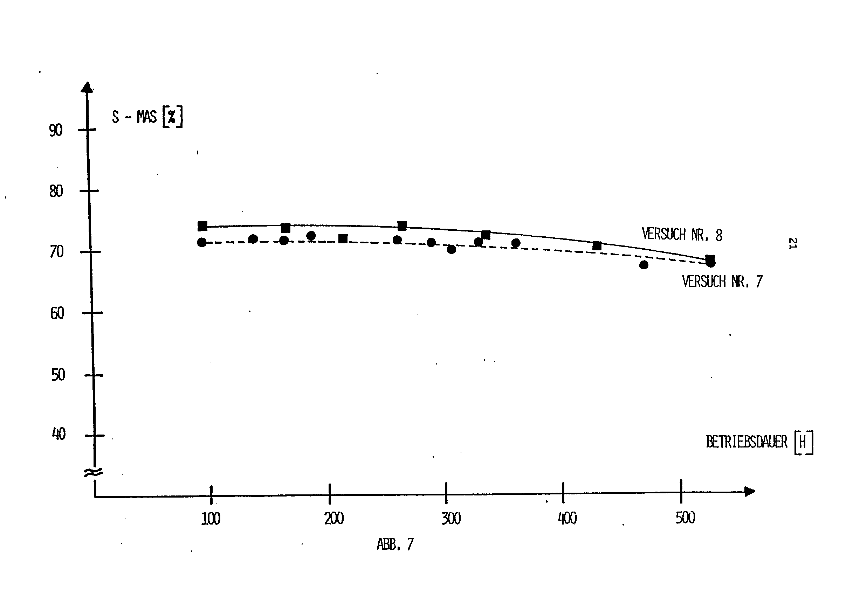

## Ansprüche

1 Verfahren zur Herstellung von Oxidationskatalysatoren auf der Basis von Heteropolysäuren des Molybdäns mit Mo, P und V als wesentlichen Elementen bzw. deren Metallsalzderivaten, gegebenenfalls unter Zusatz von inerten anorganischen Trägermaterialien,

dadurch gekennzeichnet,

daß die Präparierung der Katalysatoren aus dem katalytisch aktiven Heteropolysäurematerial A in Gegenwart von wasserlöslichen und wenig bzw. praktisch nicht flüchtigen, organischen Verbindungen B durchgeführt wird, wobei die Gemische aus A und B nach Trocknung und gegebenenfalls nach Formgebung, bei Temperaturen von 200 bis 400 grad C in Gegenwart von Sauerstoff calciniert werden.

2. Verfahren nach Anspruch 1, dadurch gekennzeichnet, daß als wasserlösliche und wenig bzw. praktisch nicht flüchtige, organische Verbindung B, ein Polymer eingesetzt wird.

3. Verfahren nach den Ansprüchen 1 und 2, dadurch gekennzeichnet, daß als Polymer B, ein synthetisches Polymer eingesetzt wird.

4. Verfahren nach den Ansprüchen 1 und 2, dadurch gekennzeichnet, daß als Polymer B, ein natürliches Polymer eingesetzt wird.

5. Verfahren nach Anspruch 1, dadurch gekennzeichnet, daß als wasserlösliche und wenig bzw. praktisch nicht flüchtige, organische Verbindung B, ein Oligomer eingesetzt wird.

6. Verfahren nach den Ansprüchen 1 bis 5, dadurch gekennzeichnet, daß als Oligomer B, ein natürliches Oligomer eingesetzt wird.

7. Verfahren nach den Ansprüchen 1 und 5, dadurch gekennzeichnet, daß als Oligomer B, ein synthetisches Oligomer eingesetzt wird.

8. Verfahren nach den Ansprüchen 1 bis 7, dadurch gekennzeichnet, daß die eingesetzte organische Verbindung eine Wasserlöslichkeit von mindestens 0,2 g in 100 g bei 20 Grad C aufweist und bei einer Temperatur von 350 Grad C einen Dampfdruck von maximal ca. 400 mbar hat.

9. Verwendung eines Oxidationskatalysators auf der Basis von Heteropolysäuren des Molybdäns für die oxidative Dehydrierung von Isobuttersäure oder ihren niederen Estern zu Methacrylsäure oder ihren niederen Estern bei Temperaturen von 250 bis 400 grad C, dadurch gekennzeichnet, daß als Katalysator ein solcher nach den Ansprüchen 1 bis 8 hergestellter verwendet wird.

ABB. 1

0 284 947

S - MAS [%]

VERSUCH NR. 2

VERSUCH NR. 1

BETRIEBSDAUER [H]

ABB. 2

0 284 947

16

U – IBS [%]

90 — ● ● ● ● VERSUCH NR. 3

▲····▲····▲ VERSUCH NR. 4

80 —

70 —

60 —

50 —

40 —

≈

100       200       300       400       500       BETRIEBSDAUER [H]

ABB. 3

17

0 284 947

ABB. 4

19

S - MAS [%]

VERSUCH NR. 6

VERSUCH NR. 5

BETRIEBSDAUER [H]

ABB. 5

90  80  70  60  50  40

100  200  300  400  500

ABB. 6

ABB. 7

S - MAS [%]

BETRIEBSDAUER [H]

VERSUCH NR. 8

VERSUCH NR. 7

21

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 331 423 (TOYO SODA) <br> * Ansprüche 1,2,4,11-13 * | 1,9 | B 01 J 27/198 <br> B 01 J 37/00 <br> C 07 C 51/25 <br> C 07 C 57/04 |
| Y | --- | 2-7 | |
| X | FR-A-2 040 546 (TOYO SODA) <br> * Ansprüche 1,11 * <br> --- | 1,9 | |
| X | FR-A-1 261 073 (BASF) <br> * Anspruch * <br> --- | 1 | |
| Y | DE-A-2 145 049 (BASF) <br> * Anspruch; Seite 2, Zeilen 26-30 * <br> --- | 2-7 | |
| A | US-A-4 092 269 (R.A. MOUNT) <br> --- | | |
| A | DE-A-3 314 192 (INTEVEP S.A.) <br> --- | | |
| A | EP-A-0 024 954 (UBE INDUSTRIES) <br> ----- | | |

**RECHERCHIERTE SACHGEBIETE (Int. Cl.4)**

B 01 J

Der vorliegende Recherchenbericht wurde für alle Patentansprüche erstellt

| Recherchenort | Abschlußdatum der Recherche | Prüfer |
|---|---|---|
| DEN HAAG | 29-04-1988 | THION M.A. |

**KATEGORIE DER GENANNTEN DOKUMENTE**

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument

                                                

& : Mitglied der gleichen Patentfamilie, übereinstimmendes
Dokument